# EUROPEAN PATENT SPECIFICATION

(11) **EP 1 333 979 B1**
(45) Date of publication and mention of the grant of the patent: **06.05.2009**
(21) Application number: 01975879.6
(22) Date of filing: 19.10.2001
(51) Int. Cl.: B41J 2/01, B41J 3/51, G06K 7/12, G06K 19/06, G03B 41/00, B41J 2/21

(54) **METHOD AND APPARATUS FOR FAULT TOLERANT DATA STORAGE ON PHOTOGRAPHS**
VERFAHREN UND VORRICHTUNG ZUR FEHLERTOLERANTEN SPEICHERUNG VON DATEN AUF FOTOGRAFIEN
PROCEDE ET DISPOSITIF RELATIFS A UNE UNITE DE STOCKAGE DE DONNEES INSENSIBLE AUX DEFAILLANCES

(30) Priority: 20.10.2000 US 693471
(43) Date of publication of application: 13.08.2003
(73) Proprietor: Silverbrook Research Pty. Limited, Balmain, NSW 2041 (AU)
(72) Inventor: SILVERBROOK, Kia, Silverbrook Research Pty Ltd, Balmain, New South Wales 2041 (AU); LAPSTUN, Paul, Balmain, New South Wales 2041 (AU); WALMSLEY, Simon, Robert, Balmain, New South Wales 2041 (AU)
(74) Representative: Moore, Barry
(86) International application number: PCT/AU2001/001317
(87) International publication number: WO 2002/034525

(56) References cited:
- EP-A- 0 764 944
- EP-A- 0 913 989
- EP-A- 0 974 924
- EP-B- 0 354 581
- US-A- 5 896 403
- US-A- 6 106 147
- DOVER J: "THE EVOLUTION OF THE PDF417 COMMUNICATIONS MEDIUM" LOGISTICS INFORMATION MANAGEMENT, BRADFORD, GB, vol. 8, no. 2, 1995, pages 34-37, XP008003286 ISSN: 0957-6053

## Description

### FIELD OF THE INVENTION

The present invention relates to a data processing method and apparatus and, in particular, discloses a data encoding method and apparatus for storing data in a fault tolerant form on photographs using an infra-red ink wherein the data is original image data taken from a camera system.

### BACKGROUND OF THE INVENTION

EP091398942 discloses methods and apparatus for generating images and/or photographs from digital data files with data, for example, audio data, stored on the photograph are described. Ink which is invisible or almost invisible to the human eye but which can be detected using an optical reader is used for printing the data on the photograph. When the ink used for printing audio data is slightly noticeable to a human, the color or colors of the photo are adjusted to mask the visual effect of the ink. In order to identify the presence and/or location of printed audio data, the audio data region on the photograph is identified using a non-destructive technique. In one embodiment, the optical density of all or a portion of the image area corresponding to the audio data region of a photograph is reduced slightly from that of the original image to identify the presence and location of the printed audio data. This approach identifies the presence and location of audio data without destroying the content of the image on which the audio data is printed. In another embodiment, audio data markers, for example, in the form of small lines or marks, are printed on the photograph to identify the presence and/or location of printed audio data. To avoid destroying the image content of the photograph the audio data region identification marks may be printed on the edges or border of the photograph. The audio data may be read and played using a hand held scanner.

As the applicant has previously noted in US 6,476,863 and US 6,459,495 there is a general need for a print media scanning system that allows for high volumes of computer data to be stored on a simple print media, such as a card while simultaneously tolerating a high degree of corruption when read by a scanning device. For example, the form of distribution can suffer a number of data corruption errors when the surface is scanned by a scanning device. The errors can include:
1. Dead pixel errors which are a result of reading the surface of the card with a linear CCD having a faulty pixel reader for a line thereby producing the same value for all points on the line.
2. Preferably, the system adopted can tolerate errors wherein text is written by the owner of the card on the surface. Such errors are ideally tolerated by any scanning system scanning the card.
3. Various data errors on the surface of the card may arise and any scuffs or blotches should be tolerated by any system determining the information stored on the surface of the card.
4. A certain degree of "play" exists in the insertion of the card into a card reader. This play can comprise a degree of rotation of the card when read by a card reader.
5. Further, the card reader is assumed to be driven past a linear image sensor such as a CCD by means of an electric motor. The electric motor may experience a degree of fluctuation which will result in fluctuations in the rate of transmission of the data across the surface of the CCD. These motor fluctuation errors should also be tolerated by the data encoding method on the surface of the card.
6. The scanner of the surface of the card may experience various device fluctuations such that the intensity of individual pixels may vary. Reader intensity variations should also be accounted for in any system or method implemented in the data contained on the surface of the card.

Ideally, any scanning system should be able to maintain its accuracy in the presence of errors due to the above factors.

In US 6,476,863 and US 6,459,495, the applicant disclosed a method and apparatus for printing data in an encoded fault tolerant form on the back of a photograph preferably using black ink on a white background. The data represented the photograph in a digital image file format and/or data comprising a computer program script which could be run to recreate the image or to apply some effect to the image. A programming language called a VARK script was invented for this purpose which was designed to be portable and device independent.

### SUMMARY OF THE INVENTION

The present invention seeks to provide an alternative to that method of encoding and recording data by printing the digital data corresponding to the image in an encoded fault tolerant digital form over or with the image itself using infra-red ink, the image and the data being recorded on a print media using an ink jet printing system as disclosed by the applicant.

It is an object of the present invention to provide for a method of printing digital data on a photograph including the steps of:
a) receiving image data corresponding to an image;
b) converting said image data into an encoded fault tolerant digital form; **characterised in that** the method includes the step of:
c) printing out said fault tolerant digital form of said image data on a surface of a print media using an ink jet printing process with an invisible ink while simultaneously printing out said image data as a photographic image in a visual, human readable form on the same surface of said print media.

Preferably, said encoding step includes compressing said image data and processing it using a Reed-Solomon algorithm.

The invisible ink may be an infra-red absorbing ink with negligible absorption in the visible spectrum.

It is a further object of the invention to provide apparatus for printing in infra-red ink encoded fault tolerant digital data on a photographic, said apparatus including:
a) a camera system for imaging an image and for outputting said image in a digital format;
b) means for processing said digital format of said image into a fault tolerant encoded digital form;
   **characterised in that** the apparatus includes:
c) means for printing said image in said digital format on a surface of print media while simultaneously printing said fault tolerant encoded digital form on the same surface using an inkjet printing process, wherein said fault tolerant encoded digital form can be printed using an infra-red ink.

Preferably, the means for printing employs a pagewidth printhead using an ink jet structure, for example, as disclosed in applicant's WO2002/002332, WO2002/002335, WO2002/002345, WO2002/002336, WO2002/002344 and W02002/002326 with a print roll feeding print media therethrough, for example as disclosed in applicant's US 6,476,863 and US 6,459,495.

According to a preferred form of the invention the information is printed out on a photograph which may be a standard size of approximately 102x 152mm (4"x 6") compared to the prior art data encoded card which has a format of 85mm x 55mm (approximately the size of a credit card). The increased size of the recording media allows approximately three to four times as much data to be recorded on the photograph compared to the previous format while using a similar or identical data encoding technique.

### BRIEF DESCRIPTION OF THE DRAWINGS

Notwithstanding any other forms, which may fall within the scope of the present invention, preferred forms of the invention will now be described, by way of example only, with reference to the accompanying drawings in which:
Fig. 1 illustrates the data surface of a card or photograph;
Fig. 2 illustrates schematically the layout of a single data block;
Fig. 3 illustrates a single data block;
Fig. 4 and Fig. 5 illustrate magnified views of portions of the data block of Fig. 3;
Fig. 6 illustrates a single target structure;
Fig. 7 illustrates the target structure of a data block;
Fig. 8 illustrates the positional relationship of targets relative to border clocking regions of a data region;
Fig. 9 illustrates the orientation columns of a datablock;
Fig. 10 illustrates the array of dots of a datablock;
Fig. 11 illustrates schematically the structure of data for Reed-Solomon encoding;
Fig. 12 illustrates in hexadecimal notation the structure of control block data before Reed-Solomon encoding;
Fig. 13 illustrates the Reed-Solomon encoding process; and
Fig. 14 illustrates the layout of encoded data within a datablock.

### DESCRIPTION OF THE PREFERRED EMBODIMENT

The present invention includes, preferably, an ink jet printing system having at least four ink jet print nozzles per printed dot in a pagewidth printhead. The four inks would be cyan, magenta, and yellow for printing a color image and an infra-red (IR) ink for printing data in an encoded fault tolerant form along with the color image. One such ink jet printhead which can print using four inks is disclosed in the applicant's WO2002/002332, WO2002/002335, WO2002/002345, WO2002/002336, WO2002/002344 and WO2002/002326.

Infrared inks suitable for use with the current invention are disclosed in the applicant's WO02/14075.

According to the invention an image is taken by a digital camera area image sensor and the scanned image is read out as data. That data is processed by a processing unit and converted thereby into an encoded form using a fault tolerant encoding method such as using a Reed-Solomon format. The converted data so encoded is then supplied to a printer means which prints out the encoded data using an ink jet printing process. Apparatus for performing these functions and techniques that can be used to encode the image data are disclosed in the applicant's US 6,476,863 and US 6,459,495, while printer means are disclosed in WO2002/002332, WO2002/002335, WO2002/002345, WO2002/002336, WO2002/002344 and WO2002/002326. These techniques were described as Artcard, alternative Artcard or Dotcard formats. In these applications, the data was printed using a black ink on a white background on the back of a card of size 85mmx55mm in an active data area of 80mmx50mm. In this way 967Kbytes of data was fault tolerantly encoded as 1.89 Mbytes of data using 15,876,000 printed dots.

### Encoded data Format

While other encoded data formats are possible, there will now be described one such encoded data format with a number of preferable features.

### Encoded data Overview

The Encoded data can be used to recover the image over which it is written or to provide a digital format thereof for manipulation in applications, for example transmission over a digital telecommunication network or image processing in a computer.

Encoded data technology can also be independent of the printing resolution. The notion of storing data as dots on print media simply means that if it is possible to put more dots in the same space (by increasing resolution), then those dots can represent more data. The preferred embodiment assumes utilization of 1600 dpi printing on a 102 mm x 152 mm (4" x 6") size photograph as the sample photograph, but it is simple to determine alternative equivalent layouts and data sizes for other photograph sizes and/or other print resolutions. For example, in the applicant's ink jet printing camera system a panoramic print can also be produced which is twice the length of the standard size photograph allowing twice the data to be recorded enhancing redundancy of the image data. Regardless of the print resolution, the reading technique remains the same. After all decoding and other overhead has been taken into account, the encoded data format is capable of storing 3 to 4 Megabyte of data for a 4"x 6' print size at print resolutions up to 1600 dpi. More encoded data can be stored at print resolutions greater than 1600 dpi.

### Format of encoded data

The structure of data on the photograph is therefore specifically designed to aid the recovery of data. This section describes the format of the data on a photograph. This format was previously described as the "alternative Artcard" format in applicant's US 6,476,863 and US 6,459,495.

### Dots

The dots printed on the photograph are in infra-red ink with or over a color image. Consequently a "data dot" is physically different from a "non-data dot". When the photograph is illuminated by an infra-red source having complementary spectral properties to the absorption characteristics of the IR ink the data appears as a monochrome display of "black" on "white" dots. The black dots correspond to dots were the IR ink is and has absorbed the IR illumination and "white" dots correspond to areas of the color image over which no IR ink has been printed and reflecting the IR illumination substantially unattenuated or only partially attenuated. Hereinafter the terms black and white as just defined will be used when referring to the IR ink dots recording data.

In describing this embodiment, the term dot refers to a physical printed dot (of IR ink) on a photograph. When an encoded data reader scans encoded data, the dots must be sampled at at least double the printed resolution to satisfy Nyquist's Theorem. The term pixel refers to a sample value from an encoded data reader device. For example, when 1600 dpi dots are scanned at 4800 dpi there are 3 pixels in each dimension of a dot, or 9 pixels per dot. The sampling process will be further explained hereinafter.

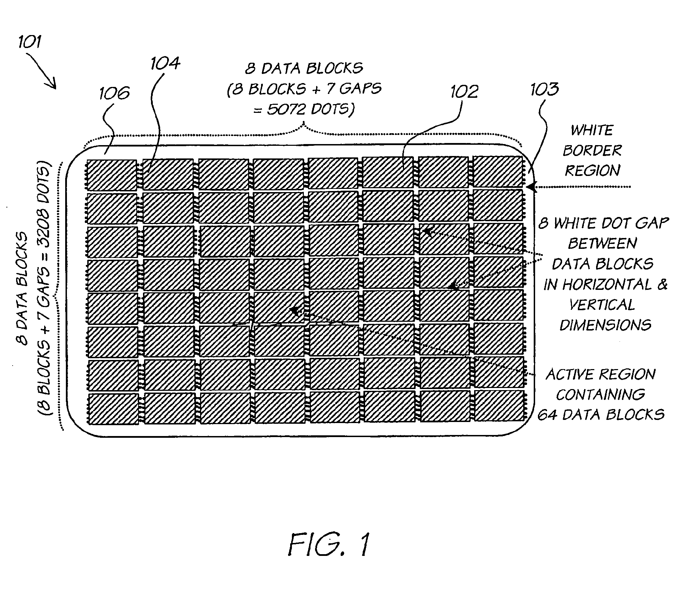

Turning to Fig. 1, there is shown the data surface 101 illustrating a sample of encoded data. Each photograph having encoded data consists of an "active" region 102 surrounded by a border region 103. The border 103 contains no data information, but can be used by an encoded data reader to calibrate signal levels. The active region is an array of data blocks e.g. 104, with each data block separated from the next by a gap of 8 image dots e.g. 106. Depending on the print resolution, the number of data blocks on a photograph will vary. On a 1600 dpi printed photograph of 4" × 6", the array can be 15 x 14 data blocks in an area of approximately 97mm. x 147mm. for 2.5mm margins. Each data block 104 has dimensions of 627 × 394 dots with an inter-block gap 106 of 8 image dots.

### Data blocks

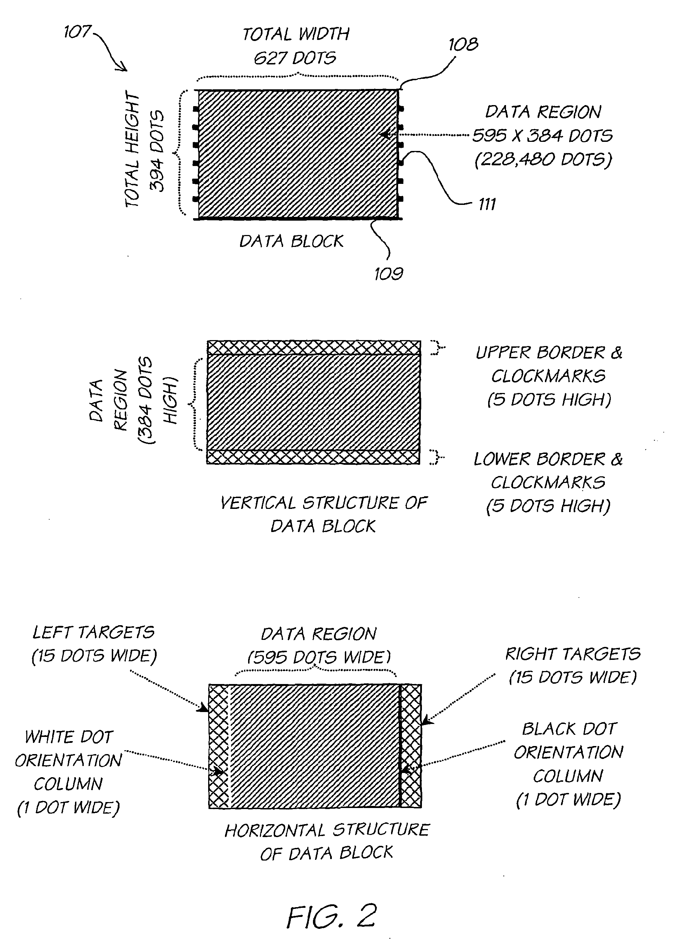

Turning now to Fig. 2, there is shown a single data block 107. The active region of encoded data consists of an array of identically structured data blocks 107. Each of the data blocks has the following structure: a data region 108 surrounded by clock-marks 109, borders 110, and targets 111. The data region holds the encoded data proper, while the clock-marks, borders and targets are present specifically to help locate the data region and ensure accurate recovery of data from within the region.

Each data block 107 has dimensions of 627 × 394 dots. Of this, the central area of 595 × 384 dots is the data region 108. The surrounding dots are used to hold the clock-marks, borders, and targets.

### Borders and Clockmarks

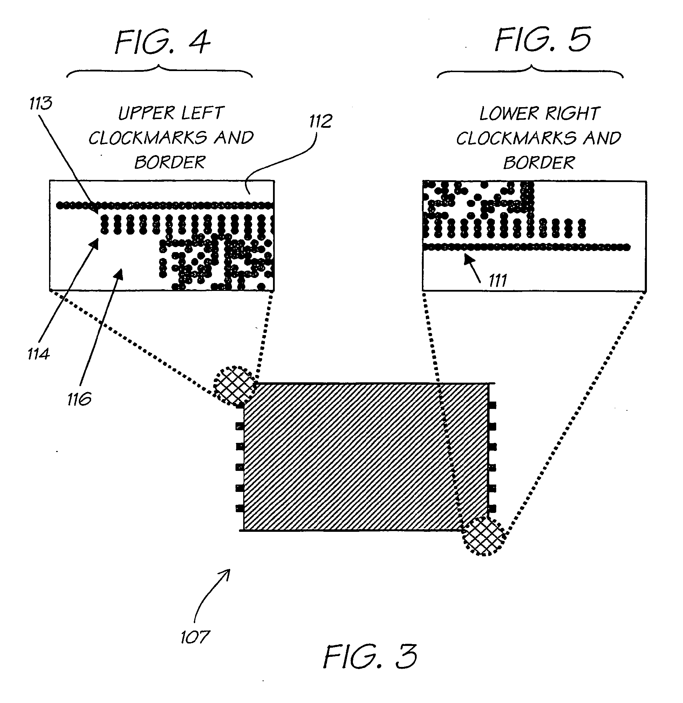

Fig. 3 illustrates a data block with Fig. 4 and Fig. 5 illustrating magnified edge portions thereof. As illustrated in Fig. 4 and Fig. 5, there are two 5 dot high border and clockmark regions 170, 177 in each data block: one above and one below the data region. For example, the top 5 dot high region consists of an outer black dot border line 112 (which stretches the length of the data block), a white dot separator line 113 (to ensure the border line is independent), and a 3 dot high set of clock marks 114. The clock marks alternate between a white and black row, starting with a black clock mark at the 8th column from either end of the data block. There is no separation between clockmark dots and dots in the data region.

The clock marks are symmetric in that if the encoded data is inserted rotated 180 degrees, the same relative border/clockmark regions will be encountered. The border 112, 113 is intended for use by an encoded data reader to keep vertical tracking as data is read from the data region. The clockmarks 114 are intended to keep horizontal tracking as data is read from the data region. The separation between the border and clockmarks by a white line of dots is desirable as a result of blurring occurring during reading. The border thus becomes a black line with white on either side, making for a good frequency response on reading. The clockmarks alternating between white and black have a similar result, except in the horizontal rather than the vertical dimension. Any encoded data reader must locate the clockmarks and border if it intends to use them for tracking. The next section deals with targets, which are designed to point the way to the clockmarks, border and data.

### Targets in the Target region

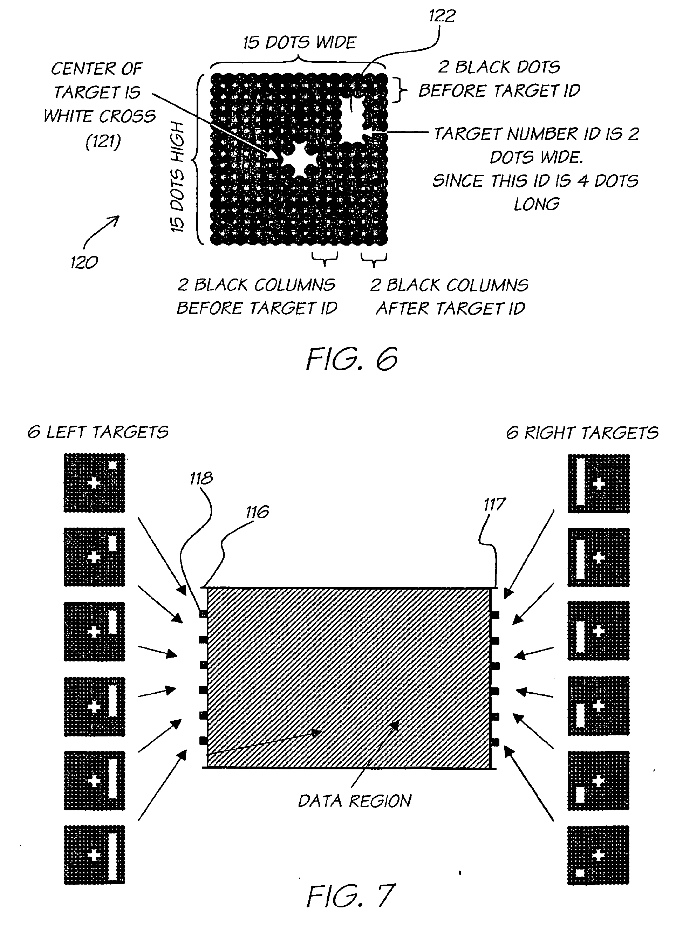

As shown in Fig. 7, there are two 15-dot wide target regions 116, 117 in each data block: one to the left and one to the right of the data region. The target regions are separated from the data region by a single column of dots used for orientation. The purpose of the Target Regions 116, 117 is to point the way to the clockmarks, border and data regions. Each Target Region contains 6 targets e.g. 118 that are designed to be easy to find by an encoded data reader. Turning now to Fig. 6 there is shown the structure of a single target 120. Each target 120 is a 15 x 15 dot black square with a center structure 121 and a run-length encoded target number 122. The center structure 121 is a simple white cross, and the target number component 122 is simply two columns of white dots, each being 2 dots long for each part of the target number. Thus target number 1's target id 122 is 2 dots long, target number 2's target id 122 is 4 dots wide etc.

As shown in Fig. 7, the targets are arranged so that they are rotation invariant with regards to card insertion. This means that the left targets and right targets are the same, except rotated 180 degrees. In the left Target Region 116, the targets are arranged such that targets 1 to 6 are located top to bottom respectively. In the right Target Region, the targets are arranged so that target numbers 1 to 6 are located bottom to top. The target number id is always in the half closest to the data region. The magnified view portions of Fig. 7 reveals clearly the how the right targets are simply the same as the left targets, except rotated 180 degrees.

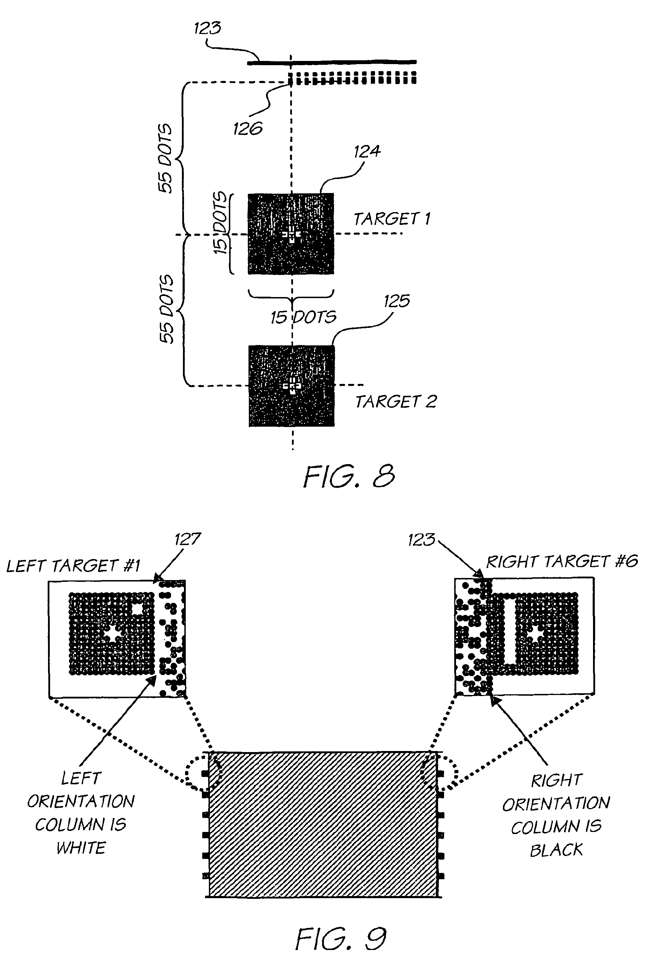

As shown in Fig. 8, the targets 124, 125 are specifically placed within the Target Region with centers 55 dots apart. In addition, there is a distance of 55 dots from the center of target 1 (124) to the first clockmark dot 126 in the upper clockmark region, and a distance of 55 dots from the center of the target to the first clockmark dot in the lower clockmark region (not shown). The first black clockmark in both regions begins directly in line with the target center (the 8th dot position is the center of the 15 dot-wide target).

The simplified schematic illustrations of Fig. 8 illustrates the distances between target centers as well as the distance from Target 1 (124) to the first dot of the first black clockmark (126) in the upper border/clockmark region. Since there is a distance of 55 dots to the clockmarks from both the upper and lower targets, and both sides of the encoded data are symmetrical (rotated through 180 degrees), the card can be read left-to-right or right-to-left. Regardless of reading direction, the orientation does need to be determined in order to extract the data from the data region.

### Orientation columns

As illustrated in Fig. 9, there are two 1 dot wide Orientation Columns 127, 128 in each data block: one directly to the left and one directly to the right of the data region. The Orientation Columns are present to give orientation information to an encoded data reader: On the left side of the data region (to the right of the Left Targets) is a single column of white dots 127. On the right side of the data region (to the left of the Right Targets) is a single column of black dots 128. Since the targets are rotation invariant, these two columns of dots allow an encoded data reader to determine the orientation of the photograph - has the photograph been inserted the right way, or back to front.

From the encoded data reader's point of view, assuming no degradation to the dots, there are two possibilities:
- If the column of dots to the left of the data region is white, and the column to the right of the data region is black, then the reader will know that the photograph has been inserted the same way as it was written.
- If the column of dots to the left of the data region is black, and the column to the right of the data region is white, then the reader will know that the photograph has been inserted backwards, and the data region is appropriately rotated. The reader must take appropriate action to correctly recover the information from the photograph.

### Data Region

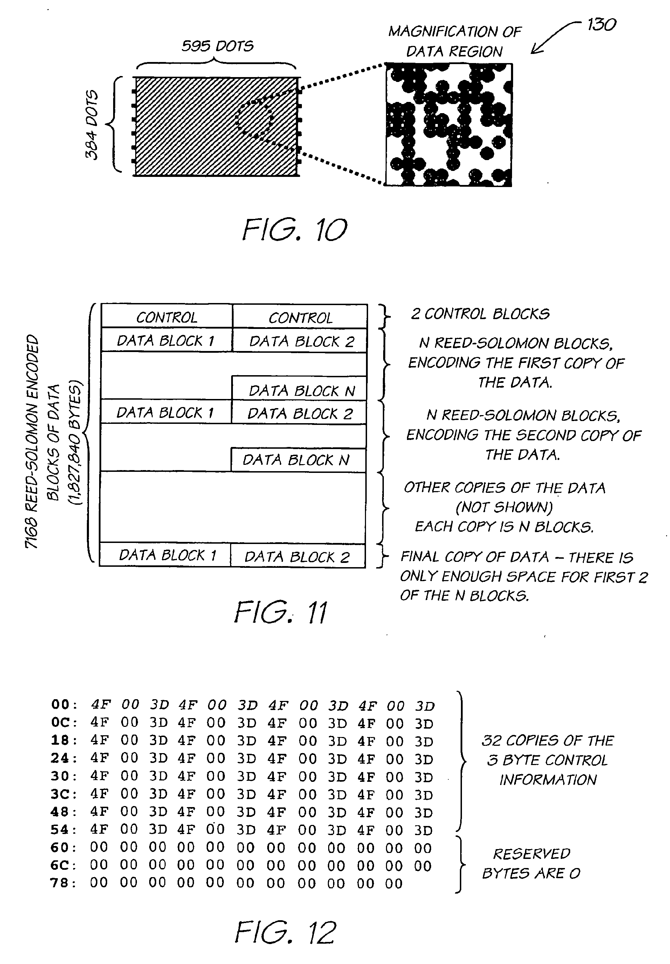

As shown in Fig. 10, the data region of a data block consists of 595 columns of 384 dots each, for a total of 228,480 dots. These dots must be interpreted and decoded to yield the original data. Each dot represents a single bit, so the 228,480 dots represent 228,480 bits, or 28,560 bytes. The interpretation of each dot can be as follows:

| | |
|---|---|
| Black | 1 |
| White | 0 |

The actual interpretation of the bits derived from the dots, however, requires understanding of the mapping from the original data to the dots in the data regions of the photograph.

### Mapping original data to data region dots

There will now be described the process of taking an original data file of maximum size 2,986,206 bytes and mapping it to the dots in the data regions of the 210 data blocks on a 1600 dpi photograph. An encoded data reader would reverse the process in order to extract the original data from the dots on a photograph. At first glance it seems trivial to map data onto dots: binary data is comprised of 1s and 0s, so it would be possible to simply write black and white dots onto the card. This scheme however, does not allow for the fact that ink can fade, parts of a card may be damaged with dirt, grime, or even scratches. Without error-detection encoding, there is no way to detect if the data retrieved from the card is correct. And without redundancy encoding, there is no way to correct the detected errors. The aim of the mapping process then, is to make the data recovery highly robust, and also give the encoded data reader the ability to know it read the data correctly.

There are four basic steps involved in mapping an original data file to data region dots:
- Compress the original data
- Redundancy encode the compressed data
- Shuffle the encoded data in a deterministic way to reduce the effect of localized encoded data damage
- Write out the shuffled, encoded data as dots to the data blocks on the photograph.

Each of these steps is examined in detail in the following sections.

### Compress the Original Data

The data to be recorded on the photograph may comprise several blocks, e.g.
1) color image data
2) audio annotation data
3) image processing control script
4) position data (such as from a GPS receiver)
5) ti me and date
6) camera orientation
7) tracking data - such as ink cartridge information, software versions, camera identification, and so forth.

For a high quality image, the source image data may be 2000 x 3000 pixels, with 3 bytes per pixel. This results in 18 Mbytes of data, which is more than can be stored in infrared dots on the photo. The image data can be compressed by a factor of around 10:1 with generally negligible reduction in image quality using an image compression technique. Suitable image compression techniques include JPEG compression based on discrete cosine transforms and Huffman coding, wavelet compression as used in the JPEG2000 standard or fractal compression.

With 10:1 compression, the 18 Mbytes of a high quality image results in 1.8 Mbytes of compressed data.

The audio annotation data can also be compressed using, for example, MP3 compression.

The image processing control scrip will typically not consume more than 10 Kbytes of data, with the exception of images embedded in the script. These images should generally be compressed. A suitable image processing script language designed for photograph processing is the 'Vark' language developed by the present applicant and disclosed in USSN 09/113,070. The remaining data is small, and need not be compressed.

### Redundancy encode using Reed-Solomon encoding

The mapping of data to encoded data dots relies heavily on the method of redundancy encoding employed. Reed-Solomon encoding is preferably chosen for its ability to deal with burst errors and effectively detect and correct errors using a minimum of redundancy. Reed Solomon encoding is adequately discussed in the standard texts such as Wicker, S., and Bhargava, V., 1994, Reed-Solomon Codes and their Applications, IEEE Press, Rorabaugh, C, 1996; Error Coding Cookbook, McGraw-Hill, Lyppens, H., 1997; Reed-Solomon Error Correction, Dr. Dobb's Journal, January 1997 (Volume 22, Issue 1).

A variety of different parameters for Reed-Solomon encoding can be used, including different symbol sizes and different levels of redundancy. Preferably, the following encoding parameters are used:
* m = 8
* t=64

Having m=8 means that the symbol size is 8 bits (1 byte). It also means that each Reed-Solomon encoded block size n is 255 bytes (2⁸ - 1 symbols). In order to allow correction of up to t symbols, 2t symbols in the final block size must be taken up with redundancy symbols. Having t=64 means that 64 bytes (symbols) can be corrected per block if they are in error. Each 255 byte block therefore has 128 (2 x 64) redundancy bytes, and the remaining 127 bytes (k=127) are used to hold original data. Thus:
* n = 255
* k = 127

The practical result is that 127 bytes of original data are encoded to become a 255-byte block of Reed-Solomon encoded data. The encoded 255-byte blocks are stored on the photograph and later decoded back to the original 127 bytes again by the encoded data reader. The 384 dots in a single column of a data block's data region can hold 48 bytes (384/8). 595 of these columns can hold 28,560 bytes. This amounts to 112 Reed-Solomon blocks (each block having 255 bytes). The 210 data blocks of a complete photograph can hold a total of 23,520 Reed-Solomon blocks (5,997,600 bytes, at 255 bytes per Reed-Solomon block). Two of the Reed-Solomon blocks are reserved for control information, but the remaining blocks are used to store data. Since each Reed-Solomon block holds 127 bytes of actual data, the total amount of data that can be stored on an photograph is 2,986,786 bytes (23,518 x 127). If the original data is less than this amount, the data can be encoded to fit an exact number of Reed-Solomon blocks, and then the encoded blocks can be replicated until all 23,518 blocks are used. Fig. 11 illustrates the overall form of encoding utilized.

Each of the 2 Control blocks 132, 133 contain the same encoded information required for decoding the remaining 23,518 Reed-Solomon blocks:
The number of Reed-Solomon blocks in a full message (16 bits stored lo/hi), and
The number of data bytes in the last Reed-Solomon block of the message (8 bits).
These two numbers are repeated 32 times (consuming. 96 bytes) with the remaining 31 bytes reserved and set to 0. Each control block is then Reed-Solomon encoded, turning the 127 bytes of control information into 255 bytes of Reed-Solomon encoded data.

The Control Block is stored twice to give greater chance of it surviving. In addition, the repetition of the data within the Control Block has particular significance when using Reed-Solomon encoding. In an uncorrupted Reed-Solomon encoded block, the first 127 bytes of data are exactly the original data, and can be looked at in an attempt to recover the original message if the Control Block fails decoding (more than 64 symbols are corrupted). Thus, if a Control Block fails decoding, it is possible to examine sets of 3 bytes in an effort to determine the most likely values for the 2 decoding parameters. It is not guaranteed to be recoverable, but it has a better chance through redundancy. Say the last 159 bytes of the Control Block are destroyed, and the first 96 bytes are perfectly ok. Looking at the first 96 bytes will show a repeating set of numbers. These numbers can be sensibly used to decode the remainder of the message in the remaining 23,518 Reed-Solomon blocks.

A hex representation of the 127 bytes in each Control Block data before being Reed-Solomon encoded would be as illustrated in Fig. 12.

### Scramble the Encoded Data

Assuming all the encoded blocks have been stored contiguously in memory, a maximum 5,997,600 bytes of data can be stored on the photograph (2 Control Blocks and 23,518 information blocks, totaling 23,520 Reed-Solomon encoded blocks). Preferably, the data is not directly stored onto the photograph at this stage however, or all 255 bytes of one Reed-Solomon block will be physically together on the card. Any dirt, grime, or stain that causes physical damage to the card has the potential of damaging more than 64 bytes in a single Reed-Solomon block, which would make that block unrecoverable. If there are no duplicates of that Reed-Solomon block, then the entire photograph cannot be decoded.

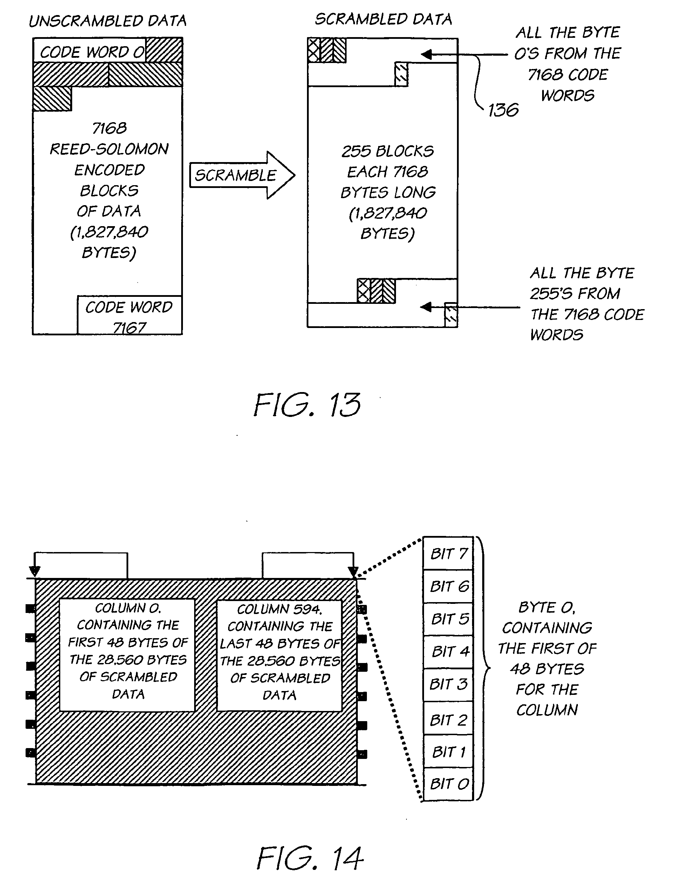

The solution is to take advantage of the fact that there are a large number of bytes on the photograph, and that the photograph has a reasonable physical size. The data can therefore be scrambled to ensure that symbols from a single Reed-Solomon block are not in close proximity to one another. Of course pathological cases of photograph degradation can cause Reed-Solomon blocks to be unrecoverable, but on average, the scrambling of data makes the data much more robust. The scrambling scheme chosen is simple and is illustrated schematically in Fig 13. All the Byte 0s from each Reed-Solomon block are placed together 136, then all the Byte 1s etc. There will therefore be 23,520 byte 0's, then 23,520 Byte 1's etc. Each data block on the photograph can store 28,560 bytes. Consequently, there are approximately 4 bytes from each Reed-Solomon block in each of the data blocks on the photograph.

Under this scrambling scheme, complete damage to 16 entire data blocks on the photograph will result in 64 symbol errors per Reed-Solomon block. This means that if there is no other damage to the photograph, the entire data is completely recoverable, even if there is no data duplication.

### Write the scrambled encoded data to the photograph

Once the original data has been Reed-Solomon encoded, duplicated, and scrambled, there are 5,997,600 bytes of data to be stored on the photograph. Each of the data blocks on the photograph stores 28,560 bytes.

The data is simply written out to the photograph data blocks so that the first data block contains the first 28,560 bytes of the scrambled data, the second data block contains the next 28,560 bytes etc.

As illustrated in Fig. 14, within a data block, the data is written out column-wise left to right. Thus the left-most column within a data block contains the first 48 bytes of the 28,560 bytes of scrambled data, and the last column contains the last 48 bytes of the 28,560 bytes of scrambled data. Within a column, bytes are written out top to bottom, one bit at a time, starting from bit 7 and finishing with bit 0. If the bit is set (1), a black dot (IR ink dot) is placed on the photograph, if the bit is clear (0), no dot is placed on the photograph.

For example, a set of 5,997,600 bytes of data can be created by scrambling 23,520 Reed-Solomon encoded blocks to be stored onto an photograph. The first 28,560 bytes of data are written to the first data block. The first 48 bytes of the first 28,560 bytes are written to the first column of the data block, the next 48 bytes to the next column and so on. Suppose the first two bytes of the 28,560 bytes are hex D3 5F. Those first two bytes will be stored in column 0 of the data block. Bit 7 of byte 0 will be stored first, then bit 6 and so on. Then Bit 7 of byte 1 will be stored through to bit 0 of byte 1. Since each "1" is stored as a black dot, and each "0" as a white dot, these two bytes will be represented on the photograph as the following set of dots:
- D3 (1101 0011) becomes: black, black, white, black, white, white, black, black
- 5F (0101 1111) becomes: white, black, white, black, black, black, black, black

The encoded image data is sent to an ink jet printer to drive the infra-red ink jet nozzles while the image data is used to drive the cyan, magenta, and yellow color nozzles while the print media is driven through the printhead of the printer.

The image taken by the camera system is now available as a photographic image with the data necessary to reproduce that image printed therewith. It is not necessary to separately locate the negative if another copy of the photograph is desired, the image can be reproduced notwithstanding damage thereto and the image is available in a digital format which can be scanned into a computer system for whatever purpose or transmitted over a telecommunications network.

Other data may be recorded along with the image data including date and location where the photograph was taken, for example if a GPS facility is incorporated in the camera system, details of the photographic exposure, whether this information is recorded as visual, digital or audio data. Audio information such as a dialogue made by the photographer at the time may also be recorded along with the image if audio facilities are included.

Another type of format the so-called Artcard format is disclosed in US 6,476,863 and US 6,459,495 and may equally be used here in place of the "alternative Artcard" format as described above. In the Artcard format a continuous area of data is printed on the print media, in the present case, in infra-red ink on the photograph surrounded by margins printed as targets at the leading and trailing edges of the data area and as other indicia to specify borders and clockmarks along the top and bottom thereof to aid decoding of the data contained in the data area. The targets are used to confirm that the orientation of the card when read is not rotated more than 1° from the horizontal and to detect whether the card has been inserted front or back first. Otherwise the reading of the data would be unreliable.

The foregoing description has been limited to specific embodiments of this invention. It will be apparent, however, that variations and modifications may be made to the invention, with the attainment of some or all of the advantages of the invention as defined in the appended claims. For example, it will be appreciated that the invention may be embodied in either hardware or software in a suitably programmed digital data processing system, both of which are readily accomplished by those of ordinary skill in the respective arts.

## Claims

1. A method of printing digital data on a photograph including the steps of:
a) receiving image data corresponding to an image;
b) converting said image data into an encoded fault tolerant digital form;
**characterised in that** the method includes the step of:
c) printing out said fault tolerant digital form of said image data using an ink jet printing process with an invisible ink on a surface of a print media while simultaneously printing out said image data as a photographic image representing said image data in a visual, human readable form on the same surface.

2. A method as claimed in claim 1, wherein converting said image to said fault tolerant encoded form comprises forming a Reed-Solomon encoded version of said image.

3. A method as claimed in claim 1, wherein said invisible ink is an infra-red absorbing ink with little absorption in the visible spectrum.

4. A method as claimed in claim 1, wherein said image data is received from a camera device and said step of printing out utilizes a print roll means storing said print media and an ink supply for said ink jet printing process which is detachable from said camera device.

5. An apparatus for printing in infrared ink encoded fault tolerant digital data on a photograph, said apparatus including:
a) a camera system for imaging an image and for outputting said image in a digital format;
b) means for processing said digital format of said image into a fault tolerant encoded digital form;
c) means for printing said image in said digital format on a surface of print media while simultaneously printing said fault tolerant encoded digital form on the same surface using an ink jet printing process, wherein said fault tolerant encoded digital form can be printed using an infra-red ink.

6. An apparatus as claimed in claim 5, wherein said means for printing employs a pagewidth printhead using an ink jet structure with a print roll feeding print media therethrough.

## Patentansprüche

1. Verfahren zum Drucken von digitalen Daten auf eine Fotografie, das die folgenden Schritte einschließt:
a) Empfangen von Bilddaten, die einem Bild entsprechen;
b) Umwandeln der Bilddaten in eine kodierte fehlertolerante digitale Form;
**dadurch gekennzeichnet, dass** das Verfahren den folgenden Schritt einschließt:
c) Ausdrucken der fehlertoleranten digitalen Form unter Verwendung eines Tintenstrahldruckverfahrens mit einer unsichtbaren Tinte auf einer Oberfläche eines Druckmediums bei gleichzeitigem Ausdrucken der Bilddaten als fotografisches Bild, das die Bilddaten in einer visuellen, vom Menschen lesbaren Form auf derselben Oberfläche darstellt.

2. Verfahren wie in Anspruch 1 beansprucht, wobei das Umwandeln des Bildes in die fehlertolerante kodierte Form das Bilden einer kodierten Reed-Solomon-Version des Bildes umfasst.

3. Verfahren wie in Anspruch 1 beansprucht, wobei die unsichtbare Tinte eine infrarotabsorbierende Tinte mit geringer Absorption im sichtbaren Spektrum ist.

4. Verfahren wie in Anspruch 1 beansprucht, wobei die Bilddaten von einer Kameravorrichtung empfangen werden und der Schritt des Ausdruckens von einem Druckrollenmittel Gebrauch macht, welches das Druckmedium und einen Tintenvorrat für das Tintenstrahldruckverfahren speichert und von der Kameravorrichtung losgelöst werden kann.

5. Gerät zum Drucken in Infrarottinte von kodierten fehlertoleranten digitalen Daten auf eine Fotografie, wobei das Gerät Folgendes einschließt:
a) ein Kamerasystem zum Abbilden eines Bildes und zum Ausgeben dieses Bildes in einem digitalen Format;
b) ein Mittel zum Verarbeiten des digitalen Formats des Bildes zu einer fehlertoleranten kodierten digitalen Form;
c) ein Mittel zum Drucken des Bildes in dem digitalen Format auf eine Oberfläche eines Druckmediums bei gleichzeitigem Drucken der fehlertoleranten kodierten digitalen Form auf dieselbe Oberfläche unter Verwendung eines Tintenstrahldruckverfahrens, wobei die fehlertolerante kodierte digitale Form unter Verwendung einer Infrarottinte gedruckt werden kann.

6. Gerät wie in Anspruch 5 beansprucht, wobei das Mittel zum Drucken einen Seitenbreitendruckkopf unter Verwendung einer Tintenstrahlanordnung einsetzt, bei der eine Druckrolle das Druckmedium durch sie hindurch zuführt.

## Revendications

1. Procédé d'impression de données numériques sur une photographie, comprenant les étapes consistant à :
a) recevoir des données d'image correspondant à une image ;
b) convertir lesdites données d'image en une forme numérique codée insensible aux défaillances ;
**caractérisé par le fait que** le procédé comprend l'étape consistant à :
c) imprimer ladite forme numérique insensible aux défaillances desdites données d'image à l'aide d'un traitement d'impression à jet d'encre avec une encre invisible sur une surface d'un support d'impression, tout en imprimant simultanément lesdites données d'image en tant qu'image photographique représentant lesdites données d'image sous une forme visuelle, apte à être lue par un humain, sur la même surface.

2. Procédé selon la revendication 1, dans lequel la conversion de ladite image en une forme codée insensible aux défaillances comprend la formation d'une version codée par codage de Reed-Solomon de ladite image.

3. Procédé selon la revendication 1, dans lequel ladite encre invisible est une encre absorbant les infrarouges avec peu d'absorption dans le spectre visible.

4. Procédé selon la revendication 1, dans lequel lesdites données d'image sont reçues à partir d'un dispositif d'appareil-photo et ladite étape d'impression utilise des moyens de rouleau d'impression stockant ledit support d'impression et une alimentation en encre pour ledit traitement d'impression par jet d'encre, qui sont détachables dudit dispositif d'appareil-photo.

5. Appareil pour imprimer en encre infrarouge des données numériques codées insensible aux défaillances sur une photographie, ledit appareil comprenant :
a) un système d'appareil-photo pour imager une image et pour émettre ladite image dans un format numérique ;
b) des moyens de traitement dudit format numérique de ladite image en une forme numérique codée insensible aux défaillances ;
c) des moyens d'impression de ladite image dans ledit format numérique sur une surface d'un support d'impression tout en imprimant simultanément ladite forme numérique codée insensible aux défaillances sur la même surface à l'aide d'un traitement d'impression à jet d'encre, ladite forme numérique codée insensible aux défaillances pouvant être imprimée à l'aide d'une encre infrarouge.

6. Appareil selon la revendication 5, dans lequel lesdits moyens d'impression emploient une tête d'impression de largeur de page utilisant une structure à jet d'encre avec un rouleau d'impression alimentant un support d'impression à travers celle-ci.
